# EUROPÄISCHE PATENTSCHRIFT

(11) **EP 0 452 673 B1**
(45) Veröffentlichungstag und Bekanntmachung des Hinweises auf die Patenterteilung: **27.07.1994**
(21) Anmeldenummer: 91103797.6
(22) Anmeldetag: 13.03.1991
(51) Int. Cl.: B23Q 1/20, B23Q 5/58, B27C 3/06

(54) **Spannvorrichtung zur Herstellung von Eckverbindungen zwischen auf Gehrung geschnittenen Fensterhölzern**
Clamping device for the production of mitre corner joints of wooden window frames
Dispositif de fixation pour fabrication des joints d'angle à onglet pour châssis de fenêtre en bois

(30) Priorität: 22.03.1990 DE 4009205
(43) Veröffentlichungstag der Anmeldung: 23.10.1991
(73) Patentinhaber: Pandel, Detlef, D-31785 Hameln (DE)
(72) Erfinder: Pandel, Detlef, D-31785 Hameln (DE)
(74) Vertreter: Wehser, Wulf, Dipl.-Ing.

(56) Entgegenhaltungen:
- DE-A- 3 643 083
- DE-A- 3 814 674
- DE-B- 1 183 226
- DE-C- 313 509
- GB-A- 1 387 423
- US-A- 1 748 325
- MACHINES PRODUCTION, Nr. 333, 28. Oktober 1982, Seiten 31-36, Boulogne, FR; H.J. ULRICH: "Tours à CN: quoi coutre les collisions"

## Beschreibung

Die Erfindung betrifft eine Vorrichtung zur Herstellung von Eckverbindungen zwischen auf Gehrung geschnittenen Fensterhölzern, bei welchen wenigstens ein in Schlitze der beiden Gehrungsflächen eingreifendes Verbindungsplättchen und wenigstens ein rechtwinkliger mit seinen Schenkeln jeweils in eine axiale Bohrung der Fensterhölzer eingreifender Verbindungswinkel vorgesehen ist, wobei die Enden der Schenkel des Verbindungswinkels in quer zur jeweiligen Achse der Fensterhölzer sich erstreckende, nach außen offene Sacklöcher zur Aufnahme von Exzentern eingreifen, wobei die Vorrichtung eine Spannvorrichtung aufweist, in die zwei zu bearbeitende Fensterhölzer so einlegbar sind, daß ihre Achsen parallel zueinander verlaufen, wobei beidseits der Spannvorrichtung jeweils ein einem Fensterholz zugeordnetes Fräsaggregat zur Herstellung der Schlitze und jeweils ein Bohraggregat zur Herstellung der Sacklöcher angeordnet ist, wobei die Aggregate einer Seite auf einem gemeinsamen Schlitten angeordnet sind, und wobei zwei weitere Bohraggregate vorgesehen sind, deren Bohrer koaxial zu den Fensterhölzerachsen liegen,

Bei einer bekannten Anordnung dieser Art (DE-OS 36 43 083) sind die Bohraggregate für die Herstellung der Sacklöcher sowie die Schlitzfräsaggregate mittels der Schlitten gegen die Fensterhölzer zustellbar. Die Schlitten werden also nacheinander gegen die Fensterhölzer bewegt, um die genannten Ausnehmungen anzubringen.

Nachteilig bei dieser bekannten Anordnung ist es, daß die Bedienungsperson zunächst den einen Schlitten vor- und zurückbewegen und dann um die Vorrichtung herumgehen muß, um den anderen Schlitten in derselben Weise zu betätigen. Diese Art der Bedienung ist vergleichsweise zeitaufwendig.

Der Erfindung liegt demgemäß die Aufgabe zugrunde, eine Vorrichtung der eingangs genannten Art so auszubilden, daß sie sich bei nach wie vor einfachem Aufbau verhältnismäßig rasch bedienen läßt.

Diese Aufgabe wird erfindungsgemäß dadurch gelöst, daß die beiden Schlitten zu einem gemeinsamen Querschlitten vereinigt oder miteinander starr verbunden sind und daß ihre Führung so ausgebildet ist, daß sie von beiden Seiten her zusammen mit den auf ihnen angeordneten Aggregaten gegen die Fensterhölzer schiebbar sind.

Mit dieser Anordnung wird erreicht, daß die Bedienungsperson die Sacklöcher und die Schlitze auf beiden Seiten der Fensterhölzer anbringen kann, ohne ihren Arbeitsplatz auf einer Seite der Vorrichtung verlassen zu müssen. Wenn nämlich der gemeinsame Schlitten aus einer neutralen Ausgangslage heraus zunächst gegen die eine Seite der beiden Fensterhölzer geführt wird, werden dort die Sacklöcher und die Schlitze angebracht. Beim Rückhub, der durch einfaches Ziehen an dem Schlitten herbeiführbar ist, wird der Schlitten über die neutrale Lage hinausbewegt, so daß auf der der bearbeiteten Seite der Fensterhölzer gegenüberliegenden Seite das Aggregat für die Anbringung der Sacklöcher sowie das Aggregat für die Anbringung der Schlitze in Eingriff kommt. Anschließend wird der gemeinsame Schlitten in die Ausgangslage (Nullstellung) zurückgeführt.

Selbstverständlich ist es möglich, zunächst an dem Schlitten zu ziehen, um die Aggregate auf der der Bedienungsperson abgewandten Seite der Vorrichtung als erste in Eingriff zu bringen und dann den Schlitten gegen die Fensterhölzer zu drücken, um auch auf dieser, der Bedienungsperson zugewandten Seite, die Werkzeuge in Eingriff zu bringen. Auch in diesem Fall muß der Schlitten durch ein erneutes Ziehen in seine Nullstellung zurückgeführt werden.

Die Vorrichtung kann also von einer Seite aus bedient werden, ohne daß die Bedienungsperson zwischen den Arbeitsgängen um die Vorrichtung herumgehen muß. Dies hat insbesondere auch den Vorteil, daß von ihrem Arbeitsplatz aus die Bedienungsperson die Aggregate zur Anbringung der stirnseitigen Bohrungen erreichen kann, die auf einem gemeinsamen Schlitten und gegebenenfalls in einem gemeinsamen Gehäuse angeordnet sind. Die beiden koaxialen Bohrungen werden mithin gleichzeitig angebracht.

Um zu verhindern, daß die Werkzeuge zur Anbringung der koaxialen Bohrungen mit den Werkzeugen zur Herstellung der Sacklöcher kollidieren, können in besonders vorteilhafter Weise der gemeinsame Querschlitten und ein Schlitten für die Aggregate zur Herstellung der Schlitze und der Sacklöcher zur Anbringung der koaxialen Bohrungen vorgesehen sein, die jeweils mit Elementen einer gemeinsamen Sperrvorrichtung versehen sind, die nur eine Bewegung eines der Schlitten zuläßt. Damit wird verhindert, daß die Bohrer zur Herstellung der Sacklöcher vorgeschoben werden, wenn zugleich die Bohrer zur Herstellung der koaxialen Bohrungen in das Holz eintreten und umgekehrt, da sich in diesen Fällen beide Bohrer im Sackloch treffen könnten.

Eine solche Sperrvorrichtung kann aus einer an dem gemeinsamen Schlitten angeordneten Nut bestehen, in welche eine an dem Schlitten mit den Aggregaten zur Herstellung der koaxialen Bohrungen angeordnete auf die Nut weisende Zunge eingreift, die zusammen mit dem Schlitten zur Herstellung der koaxialen Bohrungen aus der Nut herausziehbar ist. Bei einer Bewegung des Schlittens mit den Aggregaten zur Herstellung der koaxialen Bohrungen auf die Fensterhölzer zu läßt sich der gemeinsame Schlitten nicht bewegen. Erst wenn der Schlitten zur Herstellung der koaxialen Bohrungen wieder so weit von dem Querschlitten entfernt ist, daß die Zunge aus der Nut heraustritt, läßt sich der Querschlitten wieder bewegen. Auf diese Weise ist eine Kollision der Bohrer zur Herstellung der Sacklöcher einerseits und zur Herstellung der koaxialen Bohrungen andererseits wirksam vermieden.

Bei der bekannten Vorrichtung werden die Fensterhölzer so eingelegt und durch die Vorrichtung gehalten bzw. geführt, daß ihre mit den Gehrungsflächen versehenen Stirnseiten einander abgewandt sind und zwischen sich einen Winkel einschließen, der dem Winkel zwischen den Achsen der Fensterhölzer bei einem fertiggestellten Fenster entspricht. Hieraus ergibt sich, daß die Sacklöcher, die der Aufnahme der Exzenter zur Verspannung der Fensterhölzer gegeneinander dienen, auf der Innenseite des Fensterrahmens liegen. Dies ist an sich vorteilhaft, weil auf diese Weise die Sacklöcher an unauffälliger Stelle des Fensterrahmens angeordnet sind.

Andererseits lassen sich in dieser Lage die in den Sacklöchern befindlichen Exzenter gegebenenfalls nur mühsam erreichen und betätigen. Auf jeden Fall sind die Sacklöcher dann leichter zugänglich, wenn sie zur Rahmenaußenseite hin offen sind. Dies gilt auch für den nachträglichen Verschluß der Sacklöcher nach Fertigstellung der Eckverbindung.

Aus diesem Grunde känn es zweckmäßig sein, die Vorrichtung so auszugestalten, daß die Fensterhölzer, wie bei der bekannten Anordnung auch, so in die Vorrichtung einlegbar sind, daß ihre Achsen parallel zueinander verlaufen, wobei jedoch im Gegensatz zur bekannten Anordnung die mit den Gehrungsflächen versehenen Stirnseiten der Fensterhölzer einander zugewandt sind. Auch in diesem Fall entspricht der zwischen den Stirnseiten der Fensterhölzer eingeschlossene Winkel dem Winkel zwischen den Achsen der Fensterhölzer bei einem fertiggestellten Fenster. Allerdings müssen bei dieser Anordnung die Schlitzfräser auf gesonderten Schlitten angeordnet sein, deren Bahnen sich kreuzen, so daß die Schlitzfräser nacheinander gegen die einander zugewandten Stirnflächen der Gehrungsschnitte der Fensterhölzer geführt werden müssen. Die Bewegungsrichtung dieser Schlitten muß dann mit den Längsachsen der Fensterhölzer einen Winkel einschließen, der dem Gehrungswinkel entspricht.

Besonders vorteilhaft bei der eingangs genannten Anordnung ist es aber, daß infolge der einstückigen oder gemeinsamen Ausbildung der beiden Querschlitten der verbleibende Einzelschlitten leicht mit einem mechanischen Vorschubantrieb versehen werden kann, der den gemeinsamen Schlitten für die vier Aggregate (zwei Sacklochbohraggregate und zwei Schlitzfräser) antreibt. Dieser Vorschubantrieb liegt zweckmäßigerweise unterhalb der Spannfläche der Vorrichtung (Unterflurgetriebe) und kann aus einer Spindel, einer Zahnstange, einem Zahnriemen oder dgl. bestehen, die von einem gemeinsamen Motor angetrieben werden. In entsprechender Weise kann der Vorschub des Schlittens mit den Aggregaten zur Herstellung der koaxialen Bohrungen angetrieben sein, wobei der Antrieb mechanisch von dem Vorschubmotor für den Querschlitten abgeleitet sein kann. Eine derartige Konstruktion läßt sich besonders leicht automatisieren, indem der Vorschubmotor elektrisch oder elektronisch gesteuert wird. Insbesondere kann es sich hierbei um einen Schrittschaltmotor handeln, der an beliebiger Stelle festlegbar ist und der so gesteuert werden kann daß er den Vorschub der im Eingriff befindlichen Werkzeuge nach Erreichen der vorgesehenen Bohr- oder Frästiefe umschaltet und daß er die so betätigten Schlitten in der Nullage festhält. Insbesondere ist es auf diese Weise möglich, die Kollision zwischen den Werkzeugen zur Anbringung der koaxialen Bohrungen und denjenigen zur Anbringung der Sacklöcher und der Frässchlitze wirksam zu verhindern, da der Querschlitten erst dann ausgelöst wird, wenn der Schlitten mit den Aggregaten zur Anbringung der koaxialen Bohrungen in seine Ausgangslage bewegt wurde und umgekehrt, d. h. daß der Schlitten mit den Werkzeugen zur Anbringung der koaxialen Bohrungen erst dann ausgelöst wird, wenn sich der Querschlitten in der Nullage befindet.

Während bei der bekannten Anordnung und auch bei der eingangs genannten Ausbildungsform die Anschlagsflächen für die Fensterhölzer pfeilförmig ausgebildet sind, müssen sie bei der abgewandelten Ausführungsform eine umgekehrte Pfeilrichtung haben, also nach innen weisen, um an den Gehrungsschnitten der Fensterhölzer zur Anlage zu kommen.

Die Erfindung wird im folgenden anhand von Ausführungsbeispielen in der Zeichnung näher erläutert.
- Fig. 1: zeigt in perspektivischer Darstellung eine Ausführungsform der erfindungsgemäßen Spannvorrichtung.
- Fig. 2: zeigt die Vorrichtung nach Fig. 1 in teiweise aufgebrochener Darstellung bei einer abgewandelten Ausführungsform.
- Fig. 3: zeigt die Vorrichtung nach Fig. 1 bei einer weiteren Ausführungsform.

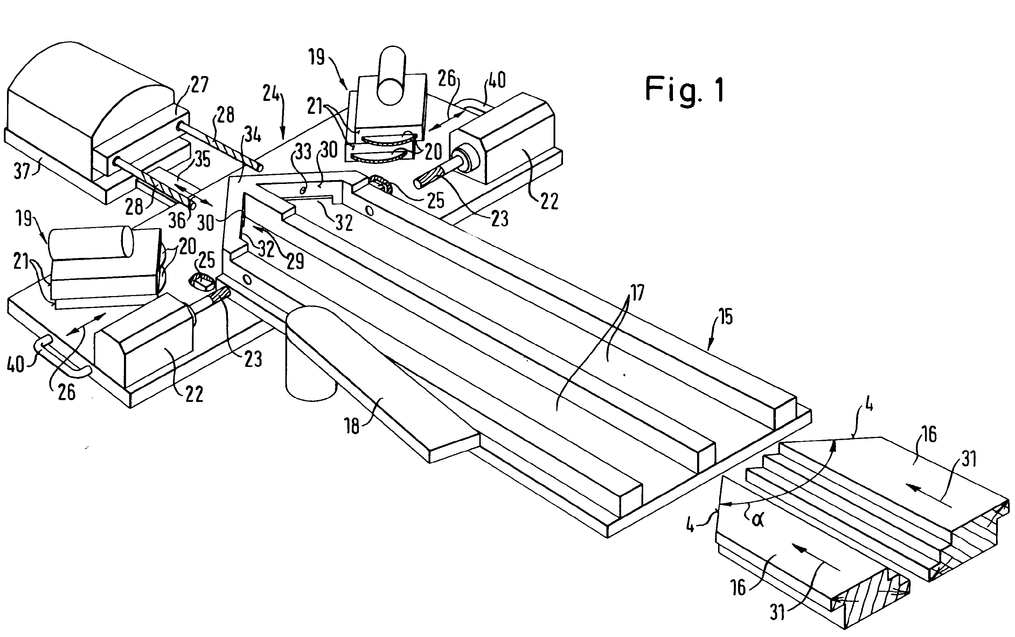

Gemäß Fig. 1 ist eine erfindungsgemäß ausgebildete Spannvorrichtung 15 vorgesehen, in welche zuvor an wenigstens einer Stirnseite auf Gehrung geschnittene Fensterhölzer 16 so einlegbar sind, daß ihre Achsen parallel zueinander verlaufen, wobei ihre Gehrungsflächen 4 einander abgewandt sind und zwischen sich einen Winkel α einschließen, der dem Winkel zwischen den Achsen der Fensterhölzer bei einem fertiggestellten Fenster entspricht. Im Normalfall beträgt mithin dieser Winkel α 90°.

Die Spannvorrichtung 15 weist zur Aufnahme der Fensterhölzer 16 zwei parallel zueinander verlaufende Nuten 17 auf, die von einem schwenkbaren und höhenverschieblichen Arm 18 im Spannzustand übergriffen werden. Beidseits der Spannvorrichtung 15 ist jeweils ein Fräsaggregat 19 angeordnet, welches zwei übereinander liegende Schlitzfräder 20 aufweist, deren Lage und Abstand der Lage von Schlitzen in den Gehrungsflächen 4 der beiden Fensterhölzer 16 entspricht. Diese Schlitze dienen der Aufnahme von Verbindungsplättchen. Die Stirnflächen 21 der Gehäuse der Fräsaggregate 19 liegen parallel zu den Gehrungsflächen der zu bearbeitenden Fensterhölzer.

Beidseits der Spannvorrichtung 15 ist jeweils ein Bohraggregat 22 angeordnet, welches mit einem Sacklochbohrer 23 zur Anbringung von Aufnahmeöffnungen für Spannexzenter versehen ist. Das Fräsaggregat 19 und Bohraggregat 22 sind bei der bekannten Anordnung auf einem Schlitten angeordnet, so daß zwei Schlitten vorgesehen sind, die nacheinander und getrennt voneinander entlang von Führungen 25 in Richtung der Doppelpfeile 26 bewegt werden müssen.

Bei der erfindungsgemäßen Anördnung gemäß Fig. 1 sind dagegen die beiden Schlitten 24 vereinigt oder miteinander starr verbunden, wobei ihre Führung 25 so ausgebildet ist, daß sie von beiden Seiten her mit den insgesamt 4 Aggregaten gegen die Fensterhölzer schiebbar sind.

In Figur 1 ist noch ein weiteres mit zwei Bohrern 28 versehenes Bohraggregat 27 dargestellt, wobei die Bohrer 28 der Herstellung von koaxialen Bohrungen zur Aufnahme eines Verbindungswinkels dient.

An dem dem Bohraggregat 27 zugewandten Ende der Nuten 17 ist eine Anschlaganordnung 29 vorgesehen, die zwei im Winkel zueinander liegende Anschlagflächen 30 für die Gehrungsflächen 4 der Fensterhölzer aufweist. Gegen diese Anschlagflächen 30 werden die Fensterhölzer 16 in Richtung der Pfeile 31 geschoben. Die Anschlagflächen 30 sind in einem Abstand zum Boden der Nuten 17 angeordnet, so daß unterhalb der Anschlagflächen 30 ein Spalt 32 offen bleibt, durch den der entsprechende Gehrungsflächenbereich der Fensterhölzer zugänglich bleibt.

Andererseits ist die Höhe der Anschlaganordnung 29 so bemessen, daß die Fensterhölzer die Anschlaganordnung überragen, so daß auch oberhalb der Anschlaganordnung die Gehrungsflächen der Fensterhölzer bearbeitbar sind. Es können also insbesondere die Schlitze zur Aufnahme der Verbindungsplättchen im eingelegten Zustand der Fensterhölzer 16 angebracht werden.

Zur exakten Einbringung der koaxialen Bohrungen werden die Bohrer 28 in Bohrungen 33 geführt, wozu der die Anschlaganordnung bildende pfeilförmige Träger 34 aus einem verschleißfesten Material besteht, oder mit aus einem verschleißfesten Material bestehenden Hülsen versehen ist.

Das Bohraggregat 27 ist entlang einer Führung 35 in Richtung des Pfeiles 36 verstellbar.

Mit der erfindungsgemäßen Anordnung kann also die Bedienungsperson die Sacklöcher und die Schlitze auf beiden Seiten der Fensterhölzer anbringen, ohne ihren Arbeitsplatz auf einer Seite der Vorrichtung verlassen zu müssen. Die Bedienungsperson braucht also zur Anbringung der Sacklöcher und Schlitze in der Gehrungsfläche des in Fig. 1 links liegenden Fensterholzes lediglich den Schlitten 24 gegen die Fensterhölzer zu schieben und nach Erreichen der vorgegebenen Bohrungs- bzw. Schlitztiefe den Schlitten in Gegenrichtung zu ziehen, so daß die Schlitze und Sacklöcher nunmehr an dem rechts in Fig. 1 liegenden Fensterholz angebracht werden. Anschlieβend wird der Schlitten in die in Fig. 1 dargestellte Ausgangslage zurückgeführt. Die Betätigung des Schlittens 24 kann durch wenigstens eine Handhabe 40 erleichtert werden, wobei derartige Handhaben an beiden Enden des Schlittens 24 angeordnet sein können, so daß die Vorrichtung sowohl von der einen als auch von der anderen Seite her bedienbar ist.

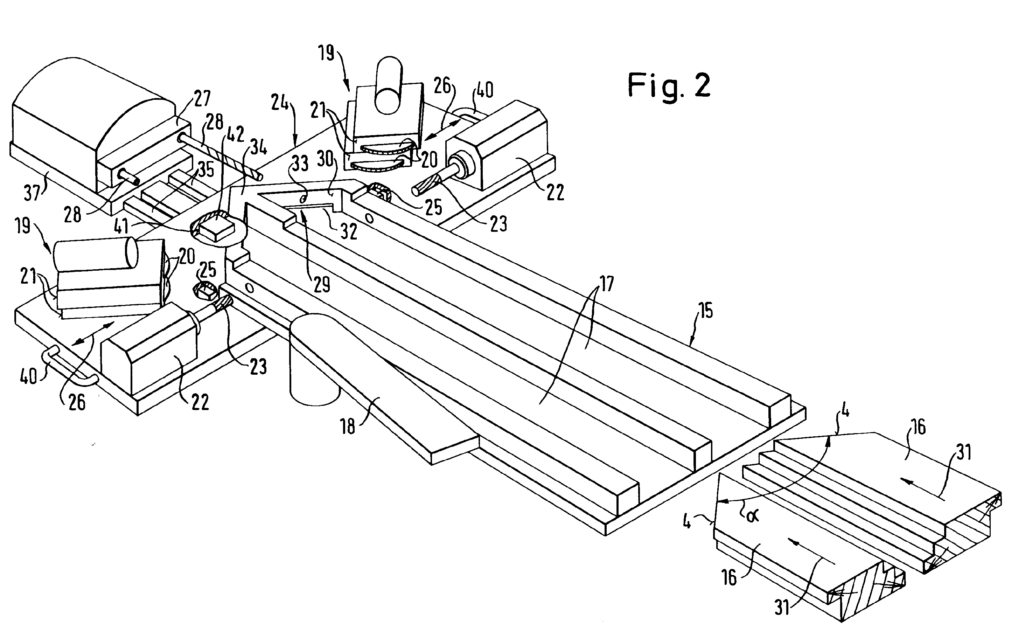

Fig. 2 ist eine Anordnung gemäß Fig. 1 und zeigt in teilweise aufgebrochener Darstellung eine in die Spannvorrichtung 15 integrierte Sperrvorrichtung, mit welcher eine Kollision der Bohrer 28 mit den Bohrern 23 verhindert wird.

Beim dargestellten Ausführungsbeispiel besteht die Sperrvorrichtung aus einer an der Unterseite des gemeinsamen Schlittens 24 angeordneten Nut 41 in welche eine an dem Schlitten 37 mit den Aggregaten 27 zur Herstellung der koaxialen Bohrungen angeordnete und auf die Nut weisende Zunge 42 eingreift, so daß sich bei einer Bewegung des Schlittens 37 auf die Fensterhölzer zu der gemeinsame Schlitten 24 nicht bewegen läßt. Erst wenn der Schlitten 37 wieder so weit von dem gemeinsamen Schlitten 24 (Querschlitten) entfernt ist, daß die Zunge 42 aus der Nut 41 heraustritt, läßt sich der Schlitten 24 wieder bewegen.

Ist andererseits der Schlitten 24 aus der in Fig. 2 dargestellten Ausgangslage heraus verschoben, so kann die Zunge 42 nicht in die Nut 41 eintreten; ihr Ende trifft vielmehr auf die ungenutete Kante des Schlittens 24, so daß auch insoweit eine Kollision der Bohrer 28 und 23 verhindert ist.

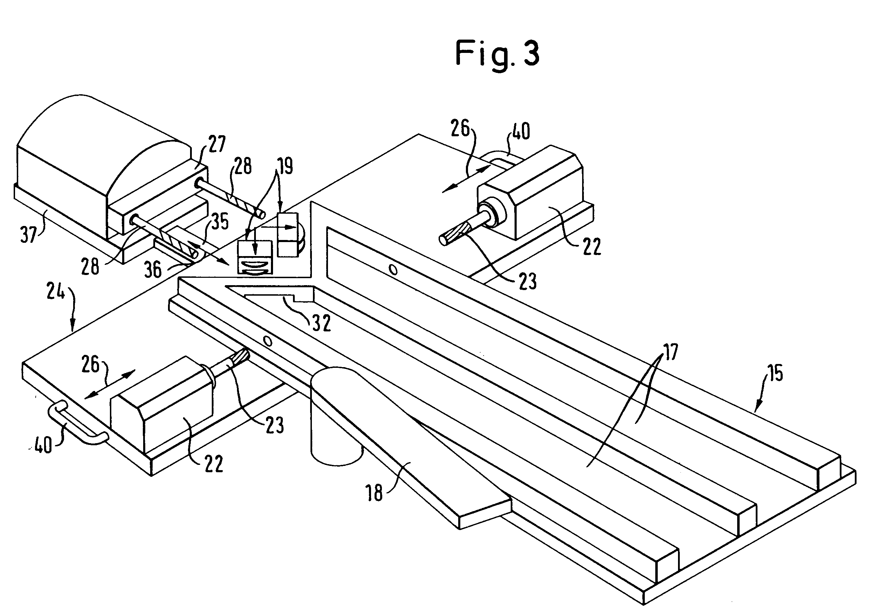

Bei der Ausführungsform nach Fig. 3 ist die Spannvorrichtung 15 so ausgebildet, daß die mit den Gehrungsflächen versehenen Stirnseiten der beiden Fensterhölzer einander zugewandt sind.

Auf diese Weise werden die Sacklöcher von der Außenseite des Fensterrahmens her in das jeweilige Fensterholz eingebracht, was die Verspannung mittels der dann in den Sacklöchern befindlichen Exzenter bei einem fertigen Fensterrahmen erleichtert.

Wie sich aus Fig. 3 ergibt, müssen hier die Aggregate 19 zur Herstellung der Schlitze auf gesonderten und hier nicht dargestellten Schlitten angeordnet sein, deren Bahnen sich kreuzen, so daß die Schlitzfräser nacheinder gegen die einander zugewandten Stirnflächen der Gehrungsschnitte der Fensterhölzer geführt werden können.

## Patentansprüche

1. Vorrichtung zur Herstellung von Eckverbindungen zwischen auf Gehrung geschnittenen Fensterhölzern (16), bei welchen wenigstens ein in Schlitze der beiden Gehrungsflächen (4) eingreifendes Verbindungsplättchen und wenigstens ein rechtwinkliger mit seinen Schenkeln jeweils in eine axiale Bohrung der Fensterhölzer (16) eingreifender Verbindungswinkel vorgesehen ist, wobei die Enden der Schenkel des Verbindungswinkels in quer zur jeweiligen Achse der Fensterhölzer (16) sich erstreckende, nach außen offene Sacklöcher zur Aufnahme von Exzentern eingreifen, wobei die Vorrichtung eine Spannvorrichtung (15) aufweist, in die zwei zu bearbeitende Fensterhölzer (16) so einlegbar sind, daß ihre Achsen parallel zueinander verlaufen, wobei beidseits der Spannvorrichtung (15) jeweils ein einem Fensterholz (16) zugeordnetes Fräsaggregat (19) zur Herstellung der Schlitze und jeweils ein Bohraggregat (22) zur Herstellung der Sacklöcher angeordnet ist, wobei die Aggregate einer Seite auf einem gemeinsamen Schlitten angeordnet sind, und wobei zwei weitere Bohraggregate (27) vorgesehen sind, deren Bohrer (28) koaxial zu den Fensterhölzerachsen liegen, dadurch gekennzeichnet, daß die beiden Schlitten zu einem gemeinsamen Querschlitten (24) vereinigt oder miteinander starr verbunden sind und daß ihre Führung (25) so ausgebildet ist, daß sie von beiden Seiten her zusammen mit den auf ihnen angeordneten Aggregaten (19,22) gegen die Fensterhölzer schiebbar sind.

2. Vorrichtung nach Anspruch 1, dadurch gekennzeichnet, daß der gemeinsame Querschlitten (24) und ein Schlitten (37) für die Aggregate (27) zur Anbringung der koaxialen Bohrungen vorgesehen sind, die jeweils mit Elementen (41,42) einer gemeinsamen Sperrvorrichtung versehen sind, die nur eine Bewegung eines der Schlitten (24,37) zuläßt.

3. Vorrichtung nach Anspruch 2, dadurch gekennzeichnet, daß die Sperrvorrichtung aus einer an dem Querschlitten (24) angeordneten Nut (41) besteht, in welche eine an dem Schlitten zur Herstellung der koaxialen Bohrungen angeordnete auf die Nut (41) weisende Zunge (42) eingreift, die zusammen mit dem Schlitten zur Herstellung der koaxialen Bohrungen aus der Nut (41) herausziehbar ist.

4. Vorrichtung nach Anspruch 1, dadurch gekennzeichnet, daß zwei zu bearbeitende Fensterhölzer (16) so in die Spannvorrichtung (15) einlegbar sind, daß ihre Achsen parallel zueinander verlaufen, wobei die mit den Gehrungsflächen (4) versehenen Stirnseiten der Fensterhölzer (16) einander zugewandt sind.

5. Vorrichtung nach Anspruch 4, dadurch gekennzeichnet, daß die Schlitzaggregate (19) innerhalb des Öffnungswinkels (α) zwischen den einander zugewandten Gehrungsflächen (4) der Fensterhölzer (16) auf gesonderten Schlitten angeordnet sind, deren Bahnen sich kreuzen.

6. Vorrichtung nach einem der vorhergegangenen Ansprüche, dadurch gekennzeichnet, daß der Querschlitten (24) mit einem mechanischen Vorschubantrieb versehen ist.

7. Vorrichtung nach Anspruch 6, dadurch gekennzeichnet, daß der Vorschubantrieb unterhalb der Spannfläche der Vorrichtung liegt und aus einer Spindel, einer Zahnstange oder einem Zahnriemen oder dergleichen besteht.

8. Vorrichtung nach Anspruch 7, dadurch gekennzeichnet, daß der Schlitten (37) mit den Aggregaten zur Herstellung der koaxialen Bohrungen (27) mit einem Vorschubantrieb versehen ist, der von dem Vorschubmotor für den Querschlitten (24) abgeleitet ist.

9. Vorrichtung nach Anspruch 8, dadurch gekennzeichnet, daß der Vorschubmotor elektrisch oder elektronisch gesteuert wird.

10. Vorrichtung nach Anspruch 9, dadurch gekennzeichnet, daß der Vorschubmotor ein Schrittschaltmotor ist.

11. Vorrichtung nach Anspruch 10, dadurch gekennzeichnet, daß der Schrittschaltmotor so steuerbar ist, daß er den Vorschub der im Eingriff befindlichen Werkzeuge nach Erreichen der vorgesehenen Bohr- oder Frästiefe umschaltet und daß er die so betätigten Schlitten in der Nullage festhält.

12. Vorrichtung nach Anspruch 11, dadurch gekennzeichnet, daß die Schlitten (24,37) durch den Schrittschaltmotor so steuerbar sind, daß der Querschlitten (24) erst dann auslösbar ist, wenn der Schlitten (37) mit den Aggregaten zur Anbringung der koaxialen Bohrungen in seiner Ausgangslage bewegt wurde und umgekehrt.

## Claims

1. Apparatus for producing corner joints between mitre-cut window timbers (16), wherein are provided at least one small connecting plate which engages in slots in both mitred surfaces (4) and at least one rectangular connecting elbow bracket which engages by its respective legs in an axial bore in each of the window timbers (16), the ends of the legs of the connecting elbow bracket engaging in outward-opening blind-holes extending transverse to the respective axis of the window timbers (16) so as to locate eccentrics, and the apparatus incorporating a fixture (15) into which two window timbers (16) for machining can be inserted with their axes parallel with one another, there being arranged on both sides of the fixture (15), each associated with a window timber (16), a milling unit (19) for producing the slots and a boring unit (22) for producing the blind-holes, the units on one side being arranged on a common slide, and there being provided two further boring units (27) whose drills (28) are situated coaxially with the axes of the window timbers,
characterised in that the two slides are united to form a common cross-traverse slide (24) or are rigidly joined to one another and that their guide (25) is so constructed that they can be pushed from both sides, together with the units (19, 22) arranged on them, against the window timbers.

2. Apparatus according to claim 1, characterised in that the common cross-traverse slide (24) and a slide (37) for the units (27) are provided to make the coaxial bores, which are respectively provided with elements (41, 42) of a common locking device that only allows one of the slides (24, 37) to move.

3. Apparatus according to claim 2, characterised in that the locking device consists of a groove (41) disposed on the cross-traverse slide (24) and into which engages a tongue (42) which faces the groove (41) and is arranged on the slide to produce the coaxial bores, said tongue (42) being adapted to be withdrawn from the groove (41) along with the slide in order to produce the coaxial bores.

4. Apparatus according to claim 1, characterised in that two window timbers (16) to be machined can be inserted into the fixture (15) with their axes parallel to one another and with the window timber end-faces exhibiting the mitred surfaces (4) facing one another.

5. Apparatus according to claim 4, characterised in that the slotting units (19) are arranged inside the included angle (α) between the mutually facing mitred surfaces (4) of the window timbers (16), on separate slides whose paths cross.

6. Apparatus according to any of the preceding claims, characterised in that the cross-traverse slide (24) has a mechanical feed drive.

7. Apparatus according to claim 6, characterised in that the feed drive is situated beneath the bearing surface of the apparatus and consists of a spindle, geared rack or toothed belt, or the like.

8. Apparatus according to claim 7, characterised in that the slide (37) having the units for making the coaxial bores (27) has a feed drive that is derived from the feed motor for the cross-traverse slide (24).

9. Apparatus according to claim 8, characterised in that the feed motor is controlled electrically or electronically.

10. Apparatus according to claim 9, characterised in that the feed motor is a stepping motor.

11. Apparatus according to claim 10, characterised in that the stepping motor is adapted to be controlled in such a manner that it reverses the feed of the tools currently engaged, once the envisaged boring or milling depth has been reached, and that it then locks the actuated slides in the neutral position.

12. Apparatus according to claim 11, characterised in that the slides (24, 37) are adapted to be controlled by the stepping motor such that the cross-traverse slide (24) cannot be actuated until the slide (37) has been moved with the units for making the coaxial bores into its starting position, and vice versa.

## Revendications

1. Dispositif de fabrication de joints d'angle entre des pièces de bois (16) pour châssis de fenêtre, coupées en onglet, dans lesquelles il est prévu au moins une plaquette de liaison, s'engageant dans des fentes des deux surfaces en onglet (4) et au moins une équerre de liaison à angle droit s'engageant avec chacune de ses branches dans un perçage axial des pièces de bois (16), dans lequel les extrémités des branches de l'équerre de liaison s'engagent dans des trous borgnes ouverts vers l'extérieur s'étendant transversalement à l'axe respectif des pièces de bois (16), destinés à loger des excentriques, dans lequel le dispositif (16) comporte un dispositif de serrage (15) dans lequel peuvent être placées deux pièces de bois (16) à usiner, de manière que leurs axes soient parallèles entre eux, dans lequel de part et d'autre du dispositif de serrage (15) il est prévu un groupe de fraisage (19) associé à une pièce de bois (16) pour la réalisation des fentes et un groupe d'alésage (22) pour la réalisation des trous borgnes, dans lequel les groupes d'un côté sont prévus sur un chariot commun et dans lequel sont prévus deux autres groupes d'alésage (27) dont les outils d'alésage (28) sont coaxiaux aux axes des pièces de bois, caractérisé en ce que les deux chariots sont réunis en un chariot transversal (24) commun ou sont reliés rigidement entre eux et en ce que leur guidage (25) est conçu de manière qu'il puisse être poussé contre les pièces de bois, à partir des deux côtés, conjointement avec les groupes (19, 22) placés sur ceux-ci.

2. Dispositif selon la revendication 1, caractérisé en ce qu'il est prévu le chariot transversal (24) commun et un chariot (37) pour les groupes (27), destinés à pratiquer les alésages coaxiaux, qui sont dotés chacun d'éléments (41, 42) d'un dispositif de blocage commun qui n'autorise que le déplacement de l'un des chariots (24, 37).

3. Dispositif selon la revendication 2, caractérisé en ce que le dispositif de blocage est constitué d'une rainure (41) prévue sur le chariot transversal (24), dans laquelle s'engage une languette (42) dirigée sur la rainure (41), prévue sur le chariot pour la réalisation des alésages coaxiaux, laquelle languette peut être extraite de la rainure (41) avec le chariot, en vue de la réalisation des alésages coaxiaux.

4. Dispositif selon la revendication 1, caractérisé en ce que deux pièces de bois (16) a usiner peuvent être placées dans le dispositif de serrage (15) de manière que leurs axes soient parallèles entre eux, les côtés frontaux des pièces de bois (16), pourvus des surfaces en onglet (4), étant tournés l'un vers l'autre.

5. Dispositif selon la revendication 4, caractérisé en ce que les groupes de réalisation des fentes (19) sont placés à l'intérieur de l'angle d'ouverture (α) entre les surfaces en onglet (4) tournées l'une vers l'autre des pièces de bois (16), sur des chariots séparés dont les trajectoires se croisent.

6. Dispositif selon l'une des revendications précédentes, caractérisé en ce que le chariot transversal (24) est pourvu d'un mécanisme d'avance.

7. Dispositif selon la revendication 6, caractérisé en ce que le mécanisme d'avance se situe au-dessous de la surface de serrage du dispositif et est constitué d'une broche, d'une crémaillère ou d'une courroie crantée ou similaire.

8. Dispositif selon la revendication 7, caractérisé en ce que le chariot (37) avec les groupes de réalisation des alésages coaxiaux (27) est pourvu d'un mécanisme d'avance qui est dérivé du moteur d'avance du chariot transversal (24).

9. Dispositif selon la revendication 8, caractérisé en ce que le moteur d'avance est commandé électriquement ou électroniquement.

10. Dispositif selon la revendication 9, caractérisé en ce que le moteur d'avance est un moteur pas à pas.

11. Dispositif selon la revendication 10, caractérisé en ce que le moteur pas à pas peut être commandé de manière à commuter l'avance des outils se trouvant en prise après que la profondeur d'alésage ou de fraisage prévue a été atteinte et de manière qu'il fixe les chariots ainsi actionnés dans la position zéro.

12. Dispositif selon la revendication 11, caractérisé en ce que les chariots (24, 37) peuvent être commandés par le moteur pas à pas de manière que le chariot transversal (24) ne puisse être déverrouillé que lorsque le chariot (37) avec les groupes de réalisation des alésages coaxiaux, a été déplacé dans sa position initiale et inversement.
